# EUROPÄISCHE PATENTANMELDUNG

(11) **EP 1 281 891 A1**
(43) Veröffentlichungstag der Anmeldung: **05.02.2003**
(21) Anmeldenummer: 02016695.5
(22) Anmeldetag: 26.07.2002
(51) Int. Cl.: F16H 3/091, F16H 3/24

(54) **Zahnradgetriebe**

(30) Priorität: 31.07.2001 DE 10137357
(71) Anmelder: ZF FRIEDRICHSHAFEN Aktiengesellschaft, 88038 Friedrichshafen (DE)
(72) Erfinder: Wafzig, Jürgen, 88097 Eriskirch (DE)

(57) **Zusammenfassung**

Die Erfindung geht aus von einem Zahnradgetriebe mit einer Antriebswelle (7), einer koaxial zur Antriebswelle (7) angeordneten Abtriebswelle (8) und einer parallel zu beiden vorgesehenen Vorgelegewelle (9), wobei die Antriebswelle (7) über schaltbare Radsätze (I bis V und R) mit jeweils einem Festrad (10 bis 14 und 22) und einem Losrad (15 bis 19 und 23) triebmäßig mit der Vorgelegewelle (9) verbindbar ist, die über einen konstanten Radsatz (K) ständig mit der Abtriebswelle (8) verbunden ist.
Es wird vorgeschlagen, dass ein Radsatz (R) für den Rückwärtsgang auf der Antriebsseite des Zahnradgetriebes angeordnet ist und dass der sechste Gang (6) als direkter Gang durch eine Schaltkupplung (f) geschaltet wird, die im geschalteten Zustand die Antriebswelle (7) direkt mit der Abtriebswelle (8) oder mit einem Festrad (20) auf der Abtriebswelle (8) verbindet.

## Beschreibung

Die Erfindung betrifft ein Zahnradgetriebe nach dem Oberbegriff von Anspruch 1.

Zahnradgetriebe in Vorgelegebauweise sind in konstruktiver Hinsicht und ganz besonders mit Rücksicht auf den Preis eine sehr günstige Getriebelösung. Sie besitzen in der Regel je eine Antriebswelle und eine Abtriebswelle sowie eine zu diesen parallel angeordnete Vorgelegewelle. Der Kraftfluß fließt über einen Radsatz von der Antriebswelle auf die Vorgelegewelle und von dort über einen weiteren Radsatz auf die Abtriebswelle. Einer der Radsätze, der bei allen Gängen beteiligt ist, besitzt zwei Festräder, die miteinander kämmen und jeweils auf der Vorgelegewelle bzw. der Antriebswelle oder der Abtriebswelle sitzen. Der andere Radsatz besitzt ein Losrad und ein Festrad. Er ist jeweils einem Gang zugeordnet. Der Radsatz für den Rückwärtsgang besitzt außerdem ein Zwischenrad, das einerseits mit dem Losrad und andererseits mit dem Festrad kämmt und so für eine Drehrichtungsumkehr sorgt. In der Regel sitzen die Festräder für die Vorwärtsgänge und den Rückwärtsgang auf der Vorgelegewelle, während die Losräder auf der Antriebswelle oder Abtriebswelle gelagert sind und durch Schaltkupplungen mit der jeweiligen Welle gekoppelt werden können.

Um einen Fahrzeugmotor während der Fahrt im optimalen Betriebsbereich betreiben zu können, sind Getriebe mit vielen Gängen wünschenswert, wobei die Stufensprünge zwischen den einzelnen Gängen vom höchsten Gang zum niedrigsten Gang progressiv ansteigen sollen. Dadurch wird erreicht, dass der Fahrer im Bereich, in dem am meisten gefahren wird, durch ein feine Abstufung eine bessere Anpassungsmöglichkeit besitzt. Ferner soll der gesamte Übersetzungsbereich zwischen dem ersten und höchsten Gang trotz einer geringen Gangzahl möglichst groß sein.

Um diese Forderungen zu erfüllen, sind mehrgängige Getriebe in Vorgelegebauweise bekannt, die neben einem konstanten Radsatz und einem Wendesatz für jeden Vorwärtsgang einen Radsatz benötigen. Es ist auch ein Sechsgang-Vorgelegegetriebe für Lastkraftwagen bekannt, Konstruktionsbücher Band 26, Johannes Loomann, Zahnradgetriebe, 1970 Springer-Verlag Berlin, Seite 4, bei dem ein konstanter Radsatz auf der Antriebsseite des Getriebes angeordnet ist. Das auf der Antriebswelle sitzende Festrad dieses Radsatzes kann über ein Schaltelement mit der Abtriebswelle gekoppelt werden, wodurch die Abtriebswelle direkt mit der Antriebswelle verbunden ist und somit einen direkten sechsten Gang bildet. Der Wechselradsatz für den Rückwärtsgang liegt auf der Abtriebsseite des Getriebes. Ein solches Getriebe benötigt für sechs Vorwärtsgänge nur fünf Radsätze.

Der Erfindung liegt die Aufgabe zugrunde, bei einem Zahnradgetriebe in Vorgelegebauweise mit einem abtriebsseitigen Radsatz mit konstanter Übersetzung einen großen Übersetzungsbereich mit möglichst wenig Radsätzen zu erreichen. Sie wird gemäß der Erfindung durch die Merkmale des Anspruchs 1 gelöst. Weitere Ausgestaltungen ergeben sich aus den Unteransprüchen.

Nach der Erfindung ist ein Radsatz für den Rückwärtsgang auf der Antriebsseite des Zahnradgetriebes angeordnet, und der sechste Gang wird als direkter Gang durch eine Schaltkupplung gebildet, die im geschalteten Zustand die Antriebswelle direkt mit der Abtriebswelle oder einem Festrad auf der Abtriebswelle verbindet. Dadurch kann ein Radsatz eingespart werden, auch wenn der konstante Radsatz auf der Abtriebsseite des Getriebes angeordnet ist. Durch die abtriebsseitige Anordnung des konstanten Radsatzes liegen die Schaltelemente, die in der Regel als synchronisierte Klauenkupplungen ausgebildet sind, auf der Motorseite des Getriebes und ermöglichen trotz konstengünstiger Einfachkonus-Synchronisierung niedrige Schaltkräfte. Bei dem erfindungsgemäßen Zahnradgetriebe sind sowohl die Baugröße, als auch das Gewicht und die Kosten gegenüber üblichen Zahnradgetrieben reduziert , die eine konstante Zahnradstufe auf der Abtriebsseite aufweisen.

Nach einer Ausgestaltung der Erfindung sind die Schaltelemente und Losräder des ersten Gangs, des zweiten Gangs und des Rückwärtsgangs der Vorgelegewelle zugeordnet. Hierdurch werden die Relativdrehzahlen beim Schalten in den direkten Gang gesenkt, so dass Maßnahmen zur Schmierung und Kühlung der Synchronisierungen entfallen können. Dies reduziert ebenfalls den Bau- und Kostenaufwand des Getriebes.

Für günstige Übersetzungen der Radsätze wird erfindungsgemäß vorgeschlagen, dass der konstante Radsatz eine Übersetzung von 0,39, der Radsatz des ersten Gangs von 3,5, der Radsatz des zweiten Gangs von 2,04, der Radsatz des dritten Gangs von 1,23, der Radsatz des vierten Gangs von 0,82, der Radsatz des fünften Gangs von 0,56 und der Radsatz des Rückwärtsgangs von 3,26 besitzt. Dabei ergibt sich eine vorteilhafte progressive Gangabstufung von ϕ = 1,71 bis ϕ = 1,43. Ferner ergibt sich ein Übersetzungsbereich von 9 im ersten Gang bis 1 im sechsten Gang. Der Rückwärtsgang hat eine Übersetzung von 8,4. Die Übersetzungen der Radsätze können von den angegebenen Werten nach oben und unten geringfügig abweichen, ohne dass dadurch die mit der Erfindung verbundenen Vorteile verloren gehen. Außerdem können durch Weglassen von Radsätzen oder Hinzufügen Zahnradgetriebe mit weniger oder mehr Gängen realisiert werden.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Getriebeschema eines erfindungsgemäßen Zahnradgetriebes,
- Fig. 2: eine Variante zu Fig. 1 und
- Fig. 3: eine tabellarische Schaltlogik und günstige Übersetzungen der Radsätze.

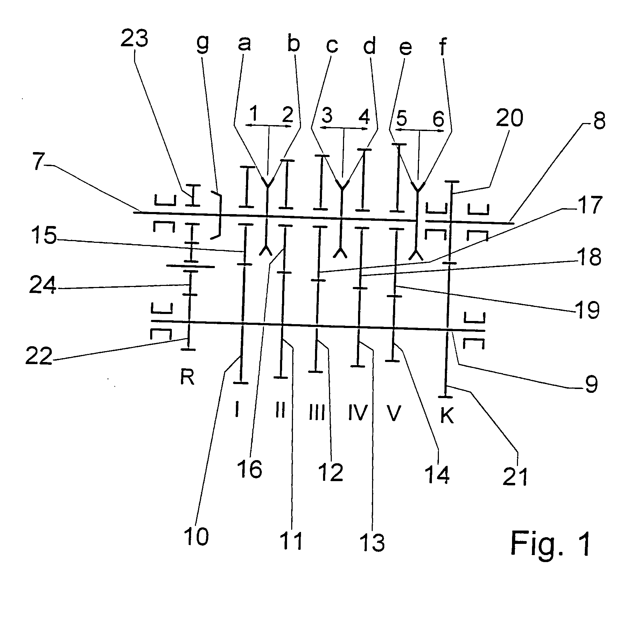

Das Zahnradgetriebe nach Fig. 1 besitzt eine Antriebswelle 7 und eine koaxial dazu angeordnete Abtriebswelle 8. Parallel zu beiden ist in einem nicht näher dargestellten Getriebegehäuse eine Vorgelegewelle 9 gelagert. Das Getriebe besitzt ferner insgesamt sieben Radsätze I bis V, R, K. Der Radsatz K hat ein Festrad 20 auf der Abtriebswelle 8 und ein Festrad 21 auf der Vorgelegewelle 9. Die Radsätze I bis V besitzen Festräder 10 bis 14, die in der Ausführung nach Fig. 1 auf der Vorgelegewelle 9 sitzen und ständig mit Losrädern 15 bis 19 kämmen, die auf der Antriebswelle 7 gelagert sind und über Schaltkupplungen a bis e wahlweise mit der Antriebswelle 7 gekoppelt werden können. Somit wird mit jeweils einem Radsatz I bis V und dem konstanten Radsatz K ein Vorwärtsgang 1 bis 5 gebildet. Am Ende der Antriebswelle 7 befindet sich ein Schaltelement f, mit dem die Antriebswelle 7 mit der Abtriebswelle 8 oder dem auf der Abtriebswelle 8 festsitzenden Festrad 20 koppelbar ist. Dadurch wird der höchste Gang, der sechste Gang 6, als direkter Gang geschaltet.

Auf der Antriebsseite des Zahnradgetriebes ist ein Radsatz R für den Rückwärtsgang angeordnet. Er besitzt ein Festrad 22 auf der Vorgelegewelle 9 und ein Losrad 23 auf der Antriebswelle 7, das über eine Schaltkupplung g geschaltet wird. Zwischen dem Losrad 23 und dem Festrad 22 des Radsatzes R ist ein Zwischenrad 24 vorgesehen, das mit den beiden Zahnrädern kämmt und somit eine Drehrichtungsumkehr der Vorgelegewelle 9 bewirkt.

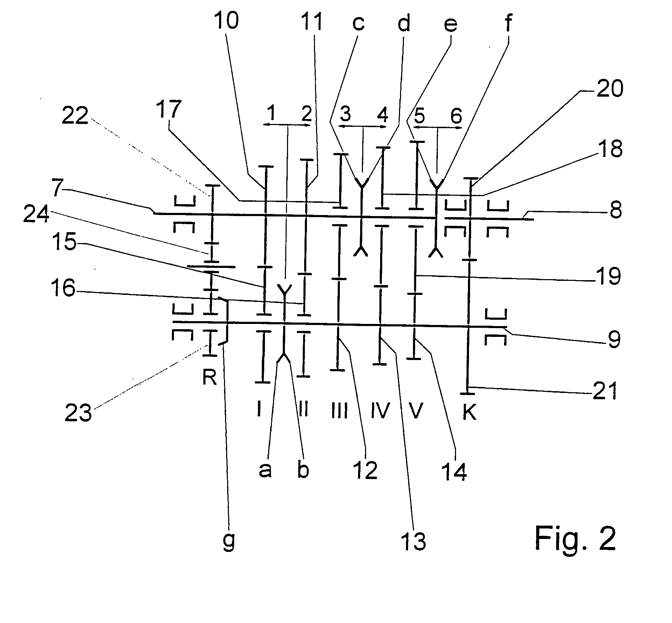

Die Ausführung nach Fig. 2 unterscheidet sich von der Ausführung nach Fig. 1 dadurch, dass das Festrad 10 und das Festrad 11 des ersten Gangs 1 bzw. des zweiten Gangs 2 auf der Antriebswelle 7 sitzen und dementsprechend die Losräder 15 und 16 der Radsätze I und II auf der Vorgelegewelle 9 gelagert sind. Folgerichtig sind die Schaltelemente a und b der Vorgelegewelle 9 zugeordnet. Ferner sitzt das Festrad 22 des Radsatzes R auf der Antriebswelle 7, während das Losrad 23 und die zugehörige Schaltkupplung g der Vorgelegewelle 9 zugeordnet sind.

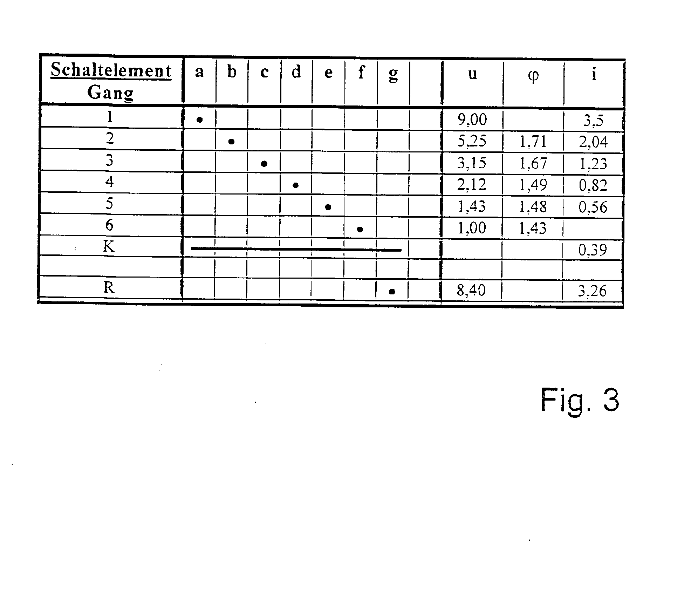

Aus der Fig. 3 ist eine Schaltlogik des Zahnradgetriebes zu entnehmen. In der Mittelposition der Schaltelemente a bis g befindet sich das Zahnradgetriebe in Neutralstellung, es werden keine Drehmomente übertragen. Wird die Schaltkupplung a betätigt, wird der erste Gang 1 geschaltet; mit Betätigen der Schaltkupplung b der zweite Gang 2 usw. Bei einer Übersetzung i der Radsätze I bis V für die Gänge 1 bis 5 und des konstanten Radsatzes K sowie des Radsatzes für den Rückwärtsgang R entsprechend der letzten Spalte der Tabelle ergeben sich die Getriebeübersetzungen u, wie sie in der drittletzten Spalte der Tabelle angegeben sind. Die vorletzte Spalte der Tabelle zeigt, dass die Getriebestufung ϕ im Bereich zwischen 1,71 und 1,43 liegt und progressiv vom sechsten Gang zum ersten Gang hin zunimmt. Somit lässt sich ein Sechsganggetriebe mit einem großen Übersetzungsbereich von 9 erreichen, dessen Getriebestufung in den oberen drei Gängen zwischen 1,49 und 1,43 liegt, während der Stufensprung ϕ zwischen dem ersten und zweiten Gang 1,71 und zwischen dem zweiten und dritten Gang 1,67 beträgt. Dadurch ist eine komfortable Fahrweise des Fahrzeugs gewährleistet.

### Bezugszeichen

- 1: erster Gang
- 2: zweiter Gang
- 3: dritter Gang
- 4: vierter Gang
- 5: fünfter Gang
- 6: sechster Gang
- 7: Antriebswelle
- 8: Abtriebswelle
- 9: Vorgelegewelle
- 10: erstes Festrad
- 11: zweites Festrad
- 12: drittes Festrad
- 13: viertes Festrad
- 14: fünftes Festrad
- 15: erstes Losrad
- 16: zweites Losrad
- 17: drittes Losrad
- 18: viertes Losrad
- 19: fünftes Losrad
- 20: Festrad
- 21: Festrad
- 22: Festrad
- 23: Losrad
- 24: Zwischenrad

- I: Radsatz
- II: Radsatz
- II: Radsatz
- IV: Radsatz
- V: Radsatz
- R: Radsatz
- K: Radsatz (Konstante)
- a: erste Schaltkupplung
- b: zweite Schaltkupplung
- c: dritte Schaltkupplung
- d: vierte Schaltkupplung
- e: fünfte Schaltkupplung
- f: sechste Schaltkupplung
- g: siebte Schaltkupplung
- u: Getriebeuntersetzung
- ϕ: Stufensprung
- i: Übersetzung

## Patentansprüche

1. Zahnradgetriebe mit einer Antriebswelle (7), einer koaxial zur Antriebswelle (7) angeordneten Abtriebswelle (8) und einer parallel zu beiden vorgesehenen Vorgelegewelle (9), wobei die Antriebswelle (7) über schaltbare Radsätze (I bis V und R) mit jeweils einem Festrad (11 bis 14 und 22) und einem Losrad (15 bis 19 und 23) triebmäßig mit der Vorgelegewelle (9) verbindbar ist, die über einen konstanten Radsatz (K) ständig mit der Abtriebswelle (8) verbunden ist, **dadurch gekennzeichnet, dass** ein Radsatz (R) für den Rückwärtsgang auf der Antriebsseite des Zahnradgetriebes angeordnet ist und dass der sechste Gang (6) als direkter Gang durch eine Schaltkupplung (f) geschaltet wird, die im geschalteten Zustand die Antriebswelle (7) direkt mit der Abtriebswelle (8) oder mit einem Festrad (20) auf der Abtriebswelle (8) verbindet.

2. Zahnradgetriebe nach Anspruch 1, **dadurch gekennzeichnet,dass** alle Schaltelemente (a bis g) und Losräder (15 bis 18 und 23) der Antriebswelle (7) zugeordnet sind.

3. Zahnradgetriebe nach Anspruch 1, **dadurch gekennzeichnet,dass** die Schaltelemente (a, b, g) und Losräder (15, 16, 23) des ersten Gangs (1), des zweiten Gangs (2) und des Rückwärtsgangs (R) der Vorgelegewelle (9) zugeordnet sind.

4. Zahnradgetriebe nach einem der vorhergehenden Ansprüche, **dadurch gekennzeichnet, dass** die Übersetzung für den konstanten Radsatz (K) 0,39, für den Radsatz (I) des ersten Gangs (1) 3,5, für den Radsatz (II) des zweiten Gangs (2) 2,04, für den Radsatz (III) des dritten Gangs (3) 1,23, für den Radsatz (IV) des vierten Gangs (4) 0,82, für den Radsatz (V) des fünften Gangs 0,56 und für den Radsatz (R) des Rückwärtsgangs 3,26 beträgt.
